# EUROPEAN PATENT SPECIFICATION

(11) **EP 2 053 798 B1**
(45) Date of publication and mention of the grant of the patent: **16.01.2013**
(21) Application number: 07817212.9
(22) Date of filing: 06.11.2007
(51) Int. Cl.: H04L 29/06

(54) **METHOD AND DEVICE FOR DATA TRANSMITTING AND RECEIVING BETWEEN RADIO NETWORK CONTROLLER AND STATION NODE**
VERFAHREN UND GERÄT FÜR DATENÜBERTRAGUNG UND EMPFANG ZWISCHEN FUNKNETZWERKKONTROLLER UND STATIONSKNOTEN
PROCÉDÉ ET DISPOSITIF DE TRANSMISSION ET DE RÉCEPTION DE DONNÉES ENTRE UN CONTRÔLEUR DE RÉSEAU RADIO ET UN NOEUD DE STATION

(30) Priority: 07.02.2007 CN 200710004886
(43) Date of publication of application: 29.04.2009
(73) Proprietor: Huawei Technologies Co., Ltd., Shenzhen, Guangdong Province 518129 (CN)
(72) Inventor: LAI, Zhichang, Shenzhen Guangdong 518129 (CN); QIN, Shengyi, Shenzhen Guangdong 518129 (CN); GUO, Chengxu, Shenzhen Guangdong 518129 (CN); LAN, Haiqing, Shenzhen Guangdong 518129 (CN)
(74) Representative: Thun, Clemens
(86) International application number: PCT/CN2007/071021
(87) International publication number: WO 2008/095394

(56) References cited:
- EP-A- 1 045 562
- CN-A- 1 490 987
- CN-A- 1 889 575
- US-A1- 2005 043 030
- LUCENT TECHNOLOGIES: "Lightweight IP Encapsulation Scheme for UTRAN User Plane" 3GPP DRAFT; R3-002146, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Berlin, Germany; 20000818, 18 August 2000 (2000-08-18), XP050147772 [retrieved on 2000-08-18]
- LUCENT TECHNOLOGIES: "IP-based Iub/Iur User Plane Protocols for R'00" 3GPP DRAFT; R3-002143, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Berlin, Germany; 20000818, 18 August 2000 (2000-08-18), XP050147769 [retrieved on 2000-08-18]
- "Universal Mobile Telecommunications System (UMTS); IP transport in UTRAN (3GPP TR 25.933 version 5.4.0 Release 5); ETSI TR 125 933" ETSI STANDARDS, LIS, SOPHIA ANTIPOLIS CEDEX, FRANCE, vol. 3-R3, no. V5.4.0, 1 December 2003 (2003-12-01), XP014015752 ISSN: 0000-0001
- MOOI C CHUAH ENRIQUE J HERNANDEZ-VALENCIA LUCENT TECHNOLOGIES BELL LABORATORIES: "A LightWeight IP Encapsulation (LIPE) Scheme; draft-chuah-avt-lipe-02.txt" IETF STANDARD-WORKING-DRAFT, INTERNET ENGINEERING TASK FORCE, IETF, CH, no. 2, 1 December 2000 (2000-12-01), XP015011800 ISSN: 0000-0004
- MOTOROLA: "User Plane Protocol Selection Criteria" 3GPP DRAFT; R3-00MOT1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Paris, France; 20001105, 5 November 2000 (2000-11-05), XP050165679 [retrieved on 2000-11-05]

## Description

### Field of the Invention

The present invention relates to radio communications, and in particular, to a technology for transmitting user-plane data between a Radio Network Controller (RNC) and a NodeB.

### Background of the Invention

The Universal Mobile Telecommunications System (UMTS) is a 3^{rd} Generation (3G) mobile communication system based on the Wideband Code Division Multiple Access (WCDMA) air interface technology, and is also known as a WCDMA communication system. The UMTS has a structure similar to that of a 2^{nd} Generation (2G) mobile communication system, and includes a Radio Access Network (RAN) and a Core Network (CN). The RAN provides radio-related functions; and the CN handles all voice calls and data connections in the UMTS and implements switching and routing to an external network. The CN is logically divided into a Circuit Switched (CS) domain and a Packet Switched (PS) domain. A UMTS Territorial Radio Access Network (UTRAN) combines with a CN and a User Equipment (UE) into a UMTS.

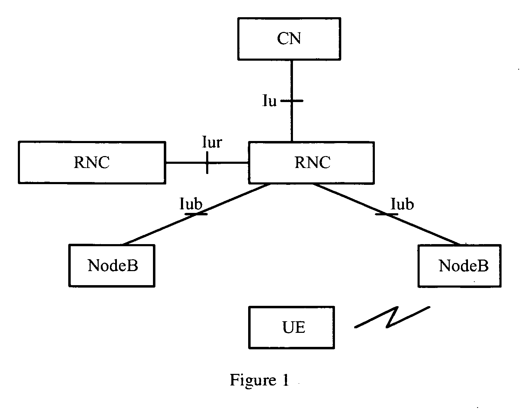

As shown in Figure 1, a UTRAN includes one or more Radio Network Subsystems (RNSs). An RNS includes an RNC and one or more base stations (NodeBs). The RNC is connected to the CN through an Iu interface, and the NodeB is connected to the RNC through an Iub interface. Within the UTRAN, the RNCs are interconnected through an Iur interface. The Iur interface may be connected directly through a physical line or connected through a transport network. The RNC allocates and controls the radio resources of the NodeB connected or related to the RNC; and the NodeB converts the data flows between an Iub interface and a Uu interface, and participates in radio resource management.

The RNC controls radio resources of the UTRAN, and is responsible for Radio Resource Control (RRC) connection setup and disconnection, handover, macro diversity combining, and radio resource management, as detailed below:
(1) System information broadcast and system access control functions;
(2) Mobility management functions such as handover and Serving RNC (SRNC) migration; and
(3) Radio resource management and control functions such as macro diversity combining, power control, and radio bearer allocation.

The NodeB is a base station (namely, radio transceiver) of a WCDMA system, and includes a radio transceiver and baseband processing components. The NodeB is interconnected with the RNC through a standard Iub interface, and performs physical-layer protocol processing of the Uu interface. The functions of the NodeB are: spectrum spreading, modulation, channel encoding and despreading, demodulation, channel decoding, and conversion between a baseband signal and a Radio Frequency (RF) signal.

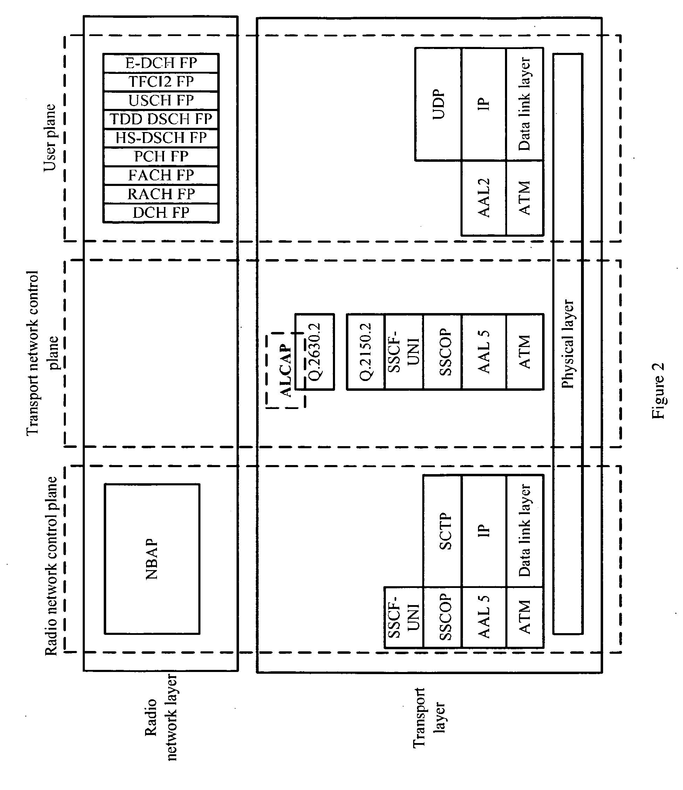

As shown in Figure 2, an Iub interface protocol stack includes: a radio network control plane, a transport network control plane, and a user plane. The bearer layer involves two transmission modes: Asynchronous Transfer Mode (ATM) transmission, and Internet Protocol (IP) transmission.

In ATM transmission mode, the transport layer of the radio network control plane uses the Service Specific Coordination Function-User Network Interface (SSCF-UNI)/Service Specific Connection Oriented Protocol (SSCOP)/ATM Adaptation Layer Type 5 (AAL5)/ATM; the transport network control plane uses the Access Link Control Application Part (ALCAP)/SSCF-UNI/SSCOP/AAL5/ATM; and the transport layer of the user plane uses the ATM Adaptation Layer Type 2 (AAL2)/ATM.

In IP transmission mode, the transport layer of the radio network control plane uses the Stream Control Transmission Protocol (SCTP)/IP/Data Link Layer; the transport layer of the user plane uses the User Datagram Protocol (UDP)/IP/Data Link Layer; and no transport network control plane exists.

Each different channel of the user plane uses a different Frame Protocol (FP) format, including: Random Access Channel (RACH) FP, Paging Channel (PCH) FP, Forward Access Channel (FACH) FP, Dedicated Channel (DCH) FP, High Speed Downlink Shared Channel (HS-DSCH) FP, and other channels such as Downlink Shared Channel (DSCH) FP. The voice and data of the UE are encapsulated in various FP frames, and are transmitted on the Iub interface through the functions of the transport layer (ATM or IP).

The WCDMA voice service includes narrowband Adaptive Multi-Rate (AMR) and broadband AMR. The narrowband AMR includes the rates such as 12.2 Kbps, 10.2 Kbps, 7.95 Kbps, 7.4 Kbps, 6.7 Kbps, 5.9 Kbps, and 4.75 Kbps; the broadband AMR is based on the 16 KHz sampling rate, and includes nine rates between 6.6 Kbps and 23.85 Kbps. The most frequently used rate is narrowband AMR 12.2 Kbps currently. The data service rates include 8 Kbps, 16 Kbps, 32 Kbps, 64 Kbps, 128 Kbps, 144 Kbps, 256 Kbps, 384 Kbps, and 2048 Kbps. The data service rate supported by the WCDMA is higher than the rate of voice service. Therefore, the bearer-layer bandwidth required by data services is far greater than that required by voice services.

The backhaul transmission resources from the NodeB to the RNC are always the most precious resources of operators. According to statistics, the backhaul transmission cost accounts for over 30% of the operation cost of radio network operators. Therefore, enhancing the transmission efficiency of the Iub interface and maximizing the transmission resource have been concerns of operators.

Currently, for the application scenarios such as E1/T1 transmission and microwave transmission, in ATM transmission mode, operators implement statistic multiplexing of the Iub interface services through Virtual Path (VP)/Virtual Channel (VC) switching by using a Hub NodeB or based on the existent ATM transport network resources, thus improving the transmission efficiency and saving transmission bandwidth. In IP transmission mode, the traffic overhead may be reduced through the technologies such as IP header compression and Point-to-Point Protocol (PPP) header compression; or multiplexing technologies such as PPP Multiplexing (PPPmux) are used to distribute the overhead to each user service flow, thus improving the transmission efficiency and saving the transmission bandwidth. However, for the Iub interface to provide the features for enhancing the transmission efficiency, not only the RNC and NodeB need to support the features, but also the intermediate transmission nodes need to support the features. In practice, either the intermediate transmission nodes do not support the features, which makes the technologies inapplicable, or the intermediate transmission nodes are too expensive, which increases the end-to-end transmission cost massively and restricts the application of the technologies for enhancing the transmission efficiency.

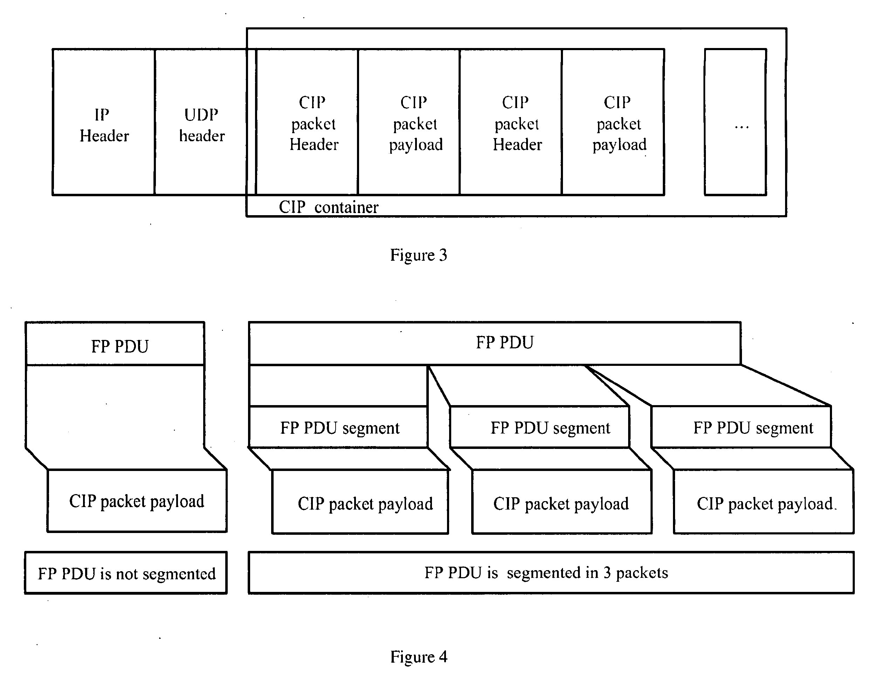

The two solutions to improving the transmission efficiency in the conventional art are described below.
(1) Composite IP solution: The Composite IP (CIP) solution is applicable to data transmission of the Iub, Iur or Iu interface user plane. The CIP solution multiplexes the CIP packets of different lengths into a CIP container, where the length of the CIP container is variable, as shown in Figure 3. In this way, the link bandwidth may be utilized efficiently, and the overhead of the UDP/IP is distributed among multiple CIP packets. The CIP supports the function of segmenting and reassembling, through which an FP Protocol Data Unit (PDU) is segmented into small packets. As shown in Figure 4, an FP PDU packet needs to be segmented to avoid IP fragmentation and maintain a lower transmission delay. However, the inventor of the present invention finds that the foregoing solution requires all FP PDU packets to be based on UDP and IP and identified through a Connection Identifier (CID). For larger FP PDU packets, more auxiliary information is generated and transmitted after segmenting or reassembling, which reduces the transmission efficiency.
(2) PPPmux solution based on High-Level Data Link Control (HDLC): PPP encapsulation needs 7-byte overhead, including a 1-byte "Flag" field, a 1-byte "Address" field, a 1-byte "Control" field, a 2-byte "Protocol" field, and a 2-byte "Cyclic Redundancy Check (CRC)" field. If, as negotiated, no "Address" field or "Control" field is transmitted and the "Protocol" field is compressed to 1 byte, the overhead of each PPP frame is 4 bytes.

The HDLC-based PPPmux is a layer-2 multiplexing technology. Its conception is: multiple encapsulated PPP sub-frames are transmitted in a PPP frame so that the overhead of the PPP frame is distributed among the PPP sub-frames, thus reducing the overhead and improving the efficiency. Multiple PPP sub-frames may be multiplexed into one PPP frame by inserting a delimiter before each PPP sub-frame. In the Network Control Protocol (NCP) negotiation stage of the PPP, the receiver may use the PPPmux control protocol to indicate receiving of multiplexed frames.

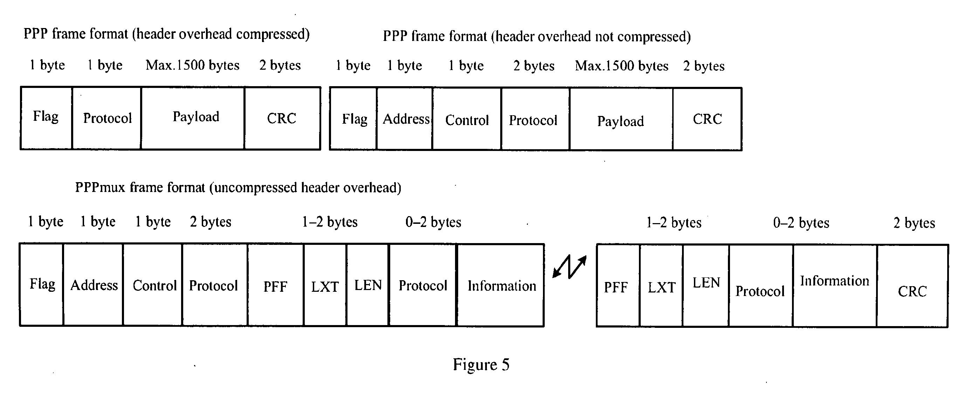

If the "Protocol" field of a PPP sub-frame is the same as the "Protocol" field of the previous PPP sub-frame, the field does not need to be transmitted. The Protocol Field Flag (PFF) bit and the Length Extension (LXT) field are length fields. If the "Protocol" field is included in the PPP sub-frame, the PFF bit is "1"; otherwise, the PFF bit is "0". The format of the PPPmux frame is shown in Figure 5.

However, this solution is based on the layer-2 multiplexing technology. Therefore, the inventor of the present invention finds that the solution is applicable to only point-to-point link networking, and the application scenarios of the solution are limited.

Lucent Technologies: "Lightweight IP Encapsulation Scheme for UTRAN User Plane"(Document for: Discussion - TR 25.933; TSG-RAN Working Group 3 Berlin, Germany, 23- 25 August 2000; TSGR3#15(00)2146; Agenda Item: 29 (IP transport in UTRAN) primarily relates to a method for multiplexing raw voice/video frames into a single IP packet to be transported across the lub/lur interface, introduced so-called LIPE proposal. LIPE is designed to carry multimedia traffic including both voice and data. The LIPE scheme uses either UDP/IP or IP as the transport layer. Each LIPE encapsulated payload consists of a variable number of multimedia data packet (MDP). For each MDP, there is a multiplexing header (MH) that conveys protocol and media specific information.

Lucent Technologies: "IP-based lub/lur User Plane Protocols for R'00"(Document for: Discussion - TR 25.933; TSG-RAN Working Group 3 Berlin, Germany, 23- 25 August 2000; TSGR3#15(00)2143; Agenda Item: 29 (IP transport in UTRAN) )primarily relates to investigate the feasibility of using an IP transport alternatives for the user plane at the Iub/lur interfaces.

"Universal Mobile Telecommunications System (UMTS); IP transport in UTRAN (3GPP TR 25.933 version 5.4.0 Release 5; ETSI TR 125 933)" primarily relates to IP transportation over the lub or lur interface.

"A Light Weight IP Encapsulation (LIPE) Schone"(<draft-chuah-avt-lipe-02.txt>

AVT Working Group; Mooi C. Chuah; Internet; Draft Enrique J. Hernandez-Valencia; Expires June 2001; Lucent Technologies Bell Laboratories December 2000) describes a lightweight IP encapsulation scheme to multiplex low bit rate audio (or multimedia) packets into a single UDP/IP session.

EP 1045562 A2 primarily relates to a packet encapsulation scheme for multiplexing application sessions - Lightweight IP Encapsulation(LIPE) - is described.

Motorola:"User Plane Protocol Selection Criteria"(Document for: Discussion; 3GPP TSG-RAN WG3 Ad Hoc Meeting #2; Paris, France, 6th-8th November 2000; TSGR3 ADHOC#2 (00)motl; Agenda Item: 2.iv) Solution Selection Criteria) primarily relates to some fundamental criteria that may be applied to consider the selection of a protocol stack for transport of user plane traffic over the narrow bandwidth interfaces, such as those that may be present on the lub.

### Summary of the Invention

The technical solution provided in embodiments of the present invention proposes a method and apparatus for receiving and transmitting data between an RNC and a NodeB, with a view to improving the data transmission efficiency of the Iub interface and making the solution applicable to multiple application scenarios.

A method for transmitting data between an RNC and a NodeB in an embodiment of the present invention includes: selecting at least two FP PDUs satisfying the multiplexing conditions from the FP PDUs to be transmitted; multiplexing the selected FP PDUs and encapsulating the multiplexed FP PDUs as payload into a UDP packet, where the UDP packet carries a multiplexing flag; and transmitting the UDP packet that carries the multiplexing flag;
wherein the multiplexing conditions comprise one or any combination of:
the FP PDUs for multiplexing have a same priority;
the length of the FP PDUs for multiplexing is less than a preset threshold; and
the FP PDUs for multiplexing belong to a same service type;
wherein the UDP packet carries the multiplexing flag by setting the multiplexing flag for the UDP packet; and the setting of the multiplexing flag for the UDP packet comprises:
setting a source UDP port number and/or a destination UDP port number of the UDP packet to a predetermined value.

An apparatus for transmitting data between an RNC and a NodeB in an embodiment of the present invention includes: a selecting unit, adapted to select at least two FP PDUs satisfying the multiplexing conditions from the FP PDUs to be transmitted; a multiplexing unit, adapted to multiplex the FP PDUs selected by the selecting unit and encapsulate the multiplexed FP PDUs as payload into a UDP packet; a flag setting unit, adapted to set a multiplexing flag for the UDP packet that uses the multiplexed FP PDUs as payload; and a transmitting unit, adapted to transmit the UDP packet that carries the multiplexing flag;
wherein the flag setting unit (104) is adapted to set a source UDP port number and/or a destination UDP port number of the UDP packet to a predetermined value which is a multiplexing flag; and
wherein the multiplexing conditions comprise one or any combination of:
the FP PDUs for multiplexing have a same priority;
the length of the FP PDUs for multiplexing is less than a preset threshold; and
the FP PDUs for multiplexing belong to a same service type.

Compared with the conventional art, the technical solution in embodiments of the present invention provides the following benefits:
The FP PDU is multiplexed as the payload of the UDP packet directly. The UDP packet is based on IP, and therefore, this technical solution is applicable to point-to-point link networking scenarios and routing networking scenarios. The FP PDU is multiplexed, without affecting the layers lower than the UDP. Therefore, no special requirement is imposed on the intermediate transmission node between the RNC and the NodeB. That is, this technical solution may be used separately, or used together with other layer-3 or layer-2 efficiency enhancing technologies such as UDP/IP header compression, PPPmux and PPP header compression to achieve higher transmission efficiency. The FP PDUs satisfying the multiplexing conditions instead of all FP PDUs are multiplexed. Therefore the FP PDUs of higher multiplexing efficiency may be selected for multiplexing, thus improving the multiplexing effect and the data transmission efficiency on the whole.

### Brief Description of the Drawings

Figure 1 shows a structure of a UTRAN network in the conventional art;
Figure 2 shows a structure of an Iub interface protocol stack in the conventional art;
Figure 3 shows the format of a multiplexed UDP/IP packet according to the CIP solution in the conventional art;
Figure 4 shows the packet payload in the CIP solution in the conventional art;
Figure 5 shows the PPPmux frame format in the conventional art;
Figure 6 is a flowchart of the method for transmitting data between an RNC and a NodeB according to the first embodiment of the present invention;
Figure 7 shows the format of a UDP packet that uses a multiplexed FP PDU as payload according to the first embodiment of the present invention;
Figure 8 shows a structure of a multiplexing header according to the first embodiment of the present invention;
Figure 9 is a flowchart of the method for receiving data between an RNC and a NodeB according to the second embodiment of the present invention;
Figure 10 shows a structure of an apparatus for transmitting data between an RNC and a NodeB according to the third embodiment of the present invention; and
Figure 11 shows a schematic diagram of an apparatus for receiving data between an RNC and a NodeB according to the fourth embodiment of the present invention.

### Detailed Description of the Invention

To make the technical solution, objectives and merits of the present invention clearer, a detailed description of the present invention is hereinafter given with reference to accompanying drawings and preferred embodiments.

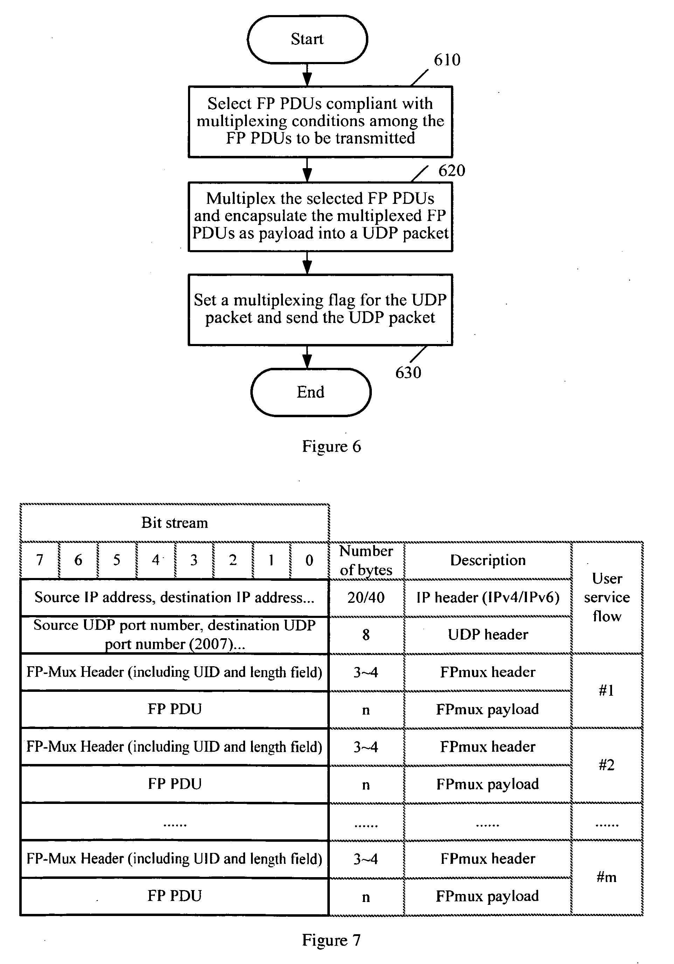

The first embodiment of the present invention provides a method for transmitting data between an RNC and a NodeB. The specific process is shown in Figure 6.

In step 610, the transmitter (for example, RNC or NodeB) selects the FP PDUs satisfying the multiplexing conditions from the FP PDUs to be transmitted. Specifically, some packets on the Iub interface (for example, the high-rate 384 Kbps data services) need no multiplexing. Their FP PDU packet length is approximately 500 bytes, and the efficiency is improved little after such packets are multiplexed. Therefore, a selection is made among the FP PDUs to be transmitted, and only the FP PDUs satisfying the multiplexing conditions instead of all FP PDUs are multiplexed. As a result, the FP PDUs of higher multiplexing efficiency are selected for multiplexing, thus improving the multiplexing effect and the data transmission efficiency on the whole.

For example, the multiplexing conditions may be one or any combination of:
(1) The FP PDUs for multiplexing have a same priority;
(2) The length of the FP PDUs for multiplexing is less than a preset threshold, which is configurable;
(3) The length of the payload of the UDP packet generated after multiplexing is less than a preset threshold, which is configurable. The length of the packet header of the UDP packet is fixed, so the multiplexing condition may also be: the length of the UDP packet generated after multiplexing is less than a preset threshold; and
(4) The FP PDUs for multiplexing belong to a same service type, for example, the R99/High Speed Packet Access (HSPA) service type or the voice/data service type.

Only the FP PDUs satisfying the multiplexing conditions are multiplexed, thus enhancing the transmission efficiency of the user service and making the best of the transmission resources.

In step 620: The transmitter multiplexes the selected FP PDUs, and encapsulates the multiplexed FP PDUs as payload into a UDP packet. That is, after multiple selected FP PDUs (at least two FP PDUs) satisfying the multiplexing conditions are multiplexed, the FP PDUs are used as payload of the UDP packet, and are separated by delimiters for the purpose of differentiation.

Specifically, a multiplexing header (namely, delimiter) is set for each FP PDU involved in multiplexing. The multiplexing header includes two parts: a User Identifier ("UID"), which is 2 bytes in length and indicates which user data service flow the FP PDU belongs to, where a maximum of 65535 UIDs are supported; a length field, which is 1-2 bytes in length. Each FP PDU and its multiplexing header are concatenated together. The multiplexed packet is encapsulated as payload of a UDP packet into a UDP packet, as shown in Figure 7.

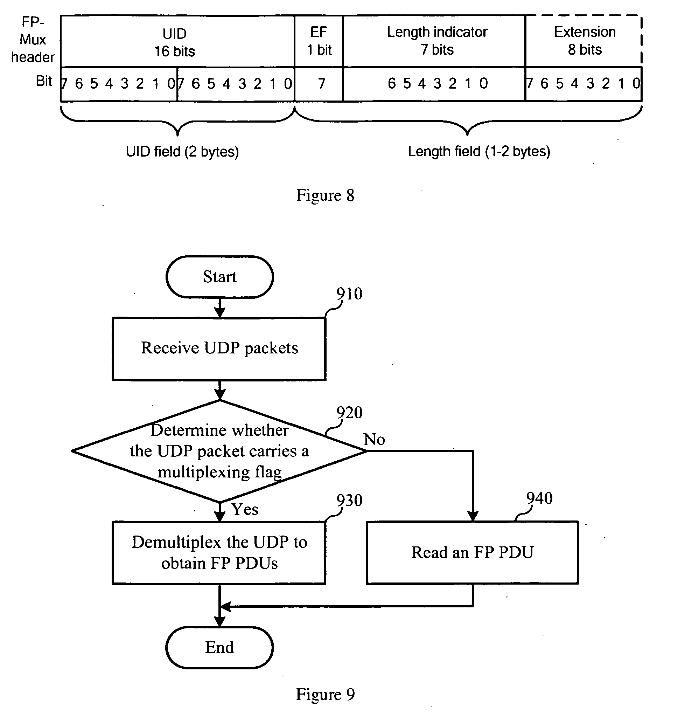

As shown in Figure 8, the multiplexing header is 3-4 bytes in length. The UID may be a destination UDP port number of the user data service flow which the FP PDU belongs to. That is because: The 3GPP specifies that the user data service flow is identified by the source IP address, destination IP address, source UDP port number, and destination UDP port number; however, the uplink user data flow identifier on the Iub interface is unrelated to the downlink user data flow identifier, namely, the UDP port number allocated by the RNC is used to identify the data flow received by the RNC but the UDP port number allocated by the NodeB is used to identify the data flow received by the NodeB. If data is transmitted to the allocated ports, the RNC and NodeB can receive the user data flows of the corresponding ports correctly, and handle the data flows accordingly. Therefore, the user data service flow can be uniquely identified by the destination UDP port number of the user data service flow which the FP PDU belongs to.

That is, in this embodiment, the user data service flow is identified by the source IP address, destination IP address, source UDP port number (namely, source UDP port number of the multiplexed UDP packet), destination UDP port number (namely, destination UDP port number of the multiplexed UDP packet), and UID. The source UDP port number (namely, source UDP port number of the multiplexed UDP packet) and the destination UDP port number (namely, destination UDP port number of the multiplexed UDP packet) are the same to all the multiplexed FP PDUs; the UID may be the destination UDP port number of the user data service flow which the corresponding FP PDU belongs to. Therefore, in the payload of the UDP packet, the user data service flow which the FP PDU belongs to is identified by the destination UDP port number of the user data service flow which the FP PDU belongs to. In this way, the user data service flow can be uniquely identified by a smaller multiplexing header, and the data transmission efficiency is improved.

The multiplexing header may also include an extension flag. When the value of the extension flag indicates existence of an extension field, the multiplexing header also includes an extension field of a preset length (for example, 8 bits). As shown in Figure 8, the Extension Flag (EF) is 1 bit. If the value of the EF is 1, an extension field exists, and the extension field is 1 byte in length. In this case, the length field is 2 bytes. Otherwise, the multiplexing header has no extension field, and the length field is 1 byte.

The multiplexing header also includes a 7-bit length field that indicates the length of the FP PDU.

If the EF is 1, the multiplexing header also includes an extension field. The extension field may be used to extend the length field or other information. For example, the 8-bit extension field is divided into two segments. Among the 8 bits, 4 bits are used together with the 7 bits in the length field to indicate the FP PDU length, and the remaining 4 bits may indicate one or more other information items. That is, when the length field is 1 byte (namely, no extension field exists), the maximum FP PDU length is 127 (2⁷-1) bytes; when the length field is 2 bytes (namely, an extension field exists), the maximum FP PDU length is 2047 (2¹¹-1) bytes. An extension flag and an extension field are introduced into the multiplexing header. Therefore, the extension field is transmitted only if extension information needs to be carried, thus reducing the fixed overhead in the multiplexing header and improving flexibility of multiplexing.

The format of the UDP packet in Figure 7 may vary. For example, all multiplexing headers may be concatenated together and placed at the forepart of the payload of the UDP packet, and/or all the FP PDUs are concatenated together and placed at the end of the payload of the UDP packet. The variations of the packet format may also achieve the objectives of the present invention only if the reading sequence is modified at the receiver accordingly.

In step 630, a multiplexing flag is set for the UDP packet, and then the UDP packet is transmitted to the receiver (for example, NodeB or RNC). Specifically, by setting the source UDP port number and/or the destination UDP port number of the UDP packet to a predetermined value, the UDP packet is marked as a UDP packet multiplexed with multiple FP PDUs. Therefore, the source UDP port number and/or the destination UDP port number may be set to a user-defined port number (for example, 2007), and then transmitted to the receiver. Therefore, by using the specific source UDP port number and/or the destination UDP port number as a multiplexing flag of the UDP packet, the embodiment of the present invention indicates whether the UDP packet is multiplexed without adding extra overhead, and enables the receiver to identify and resolve the multiplexed UDP packet against the non-multiplexed UDP packet correctly.

It should be noted that in this embodiment, the transmitter can still transmit an FP PDU unsatisfying the multiplexing conditions based on the solution specified by the 3GPP, namely, the user data service flow which the FP PDU belongs to is identified according to the source IP address, source UDP port number, destination IP address, and destination UDP port number.

It is evident that the FP PDU is multiplexed as the payload of the UDP packet directly in this embodiment of the present invention. The UDP packet is based on IP, and therefore, the technical solution in this embodiment is applicable to point-to-point link networking scenarios and routing networking scenarios. The FP PDU is multiplexed, without affecting the layers lower than the UDP. Therefore, no special requirement is imposed on the intermediate transmission node between the RNC and the NodeB. That is, this technical solution may be used separately, or used together with other layer-3 or layer-2 efficiency enhancing technologies such as UDP/IP header compression, PPPmux and PPP header compression to achieve higher transmission efficiency.

Corresponding to the first embodiment, the second embodiment of the present invention provides a method for receiving data between an RNC and a NodeB, as shown in Figure 9.

In step 910, the receiver (for example, NodeB or RNC) receives a UDP packet.

Subsequently in step 920, the receiver determines whether the UDP packet carries a multiplexing flag. The multiplexing flag indicates that the UDP packet is multiplexed with at least two FP PDUs. In the first embodiment, by setting the source UDP port number and/or destination UDP port number of the UDP packet to a predetermined value, the multiplexing flag is set. In the second embodiment, therefore, if the source UDP port number and/or destination UDP port number of the UDP packet is the predetermined value, the UDP packet includes a multiplexing flag. If the UDP packet includes a multiplexing flag, the process proceeds to step 930, or else step 940.

In step 930, the receiver demultiplexes the payload of the UDP packet to obtain FP PDUs. It is understandable to those skilled in the art that, because the UDP packet carries a multiplexing flag, at least two FP PDUs are obtained after the payload of the UDP packet is demultiplexed. Specifically, at least two FP PDUs and their multiplexing headers are included in the payload of a UDP packet, and each multiplexing header includes a UID and a length field. Therefore, the demultiplexing is performed in the following way:
The multiplexing header of an FP PDU is read from the payload of the UDP packet; according to the length field in the multiplexing header, the corresponding FP PDU is read from the payload of the UDP packet; according to the UID in the multiplexing header, the user data service flow which the FP PDU belongs to is determined. This step is repeated until all data in the payload of the UDP packet is processed. The UID may be a destination UDP port number of the user data service flow which the FP PDU belongs to.

The multiplexing header of each FP PDU includes a UID, an extension flag, a length field, and possibly an extension field. Therefore, at the time of reading the multiplexing header of the FP PDU, the basic part (namely, UID + extension flag + length field) of the multiplexing header is read first. A judgment is made about whether an extension field exists according to the extension flag in the basic part. If an extension field exists, the extension field of the multiplexing header is read from the payload of the UDP packet; otherwise, the reading of the extension field is ignored.

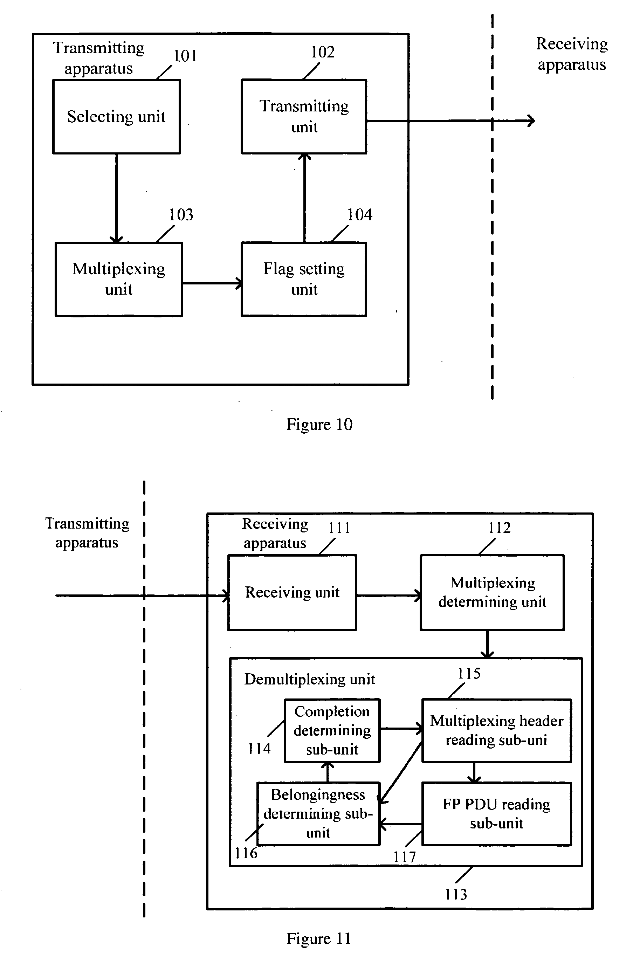

The third embodiment of the present invention provides an apparatus for transmitting data between an RNC and a NodeB. As shown in Figure 10, the transmitting apparatus (for example, RNC or NodeB) includes: a selecting unit 101, adapted to select at least two FP PDUs satisfying the multiplexing conditions from the FP PDUs to be transmitted (examples of the multiplexing conditions are: the FP PDUs for multiplexing have a same priority, the length of the FP PDUs for multiplexing is less than a preset threshold, the length of the payload of the UDP packet generated after multiplexing or the length of the UDP packet is less than a preset threshold, or any combination thereof); a multiplexing unit 103, adapted to multiplex the FP PDUs selected by the selecting unit 101 and encapsulate the multiplexed FP PDUs as payload into a UDP packet; a flag setting unit 104, adapted to set a multiplexing flag for the UDP packet that uses the multiplexed FP PDUs as payload; and a transmitting unit 102, adapted to transmit the UDP packet that carries the multiplexing flag set by the flag setting unit 104.

There may be multiple implementations of the flag setting unit 104. For example, the flag setting unit 104 may be adapted to set the source UDP port number and/or destination UDP port number of the UDP packet to a predetermined value which is a multiplexing flag. The multiplexing unit 103 further includes: a sub-unit for setting a multiplexing header for each FP PDU involved in multiplexing, where the multiplexing header carries a UID indicative of the user data service flow which the FP PDU belongs to, and a length field indicative of the FP PDU length, and the UID is the destination UDP port number of the user data service flow which the FP PDU belongs to; and a sub-unit that concatenates each FP PDU and each multiplexing header of FP PDU.

The fourth embodiment of the present invention provides an apparatus for receiving data between an RNC and a NodeB. The receiving apparatus corresponds to the transmitting apparatus in the third embodiment. As shown in Figure 11, the receiving apparatus (for example, NodeB or RNC) includes: a receiving unit 111, adapted to receive a UDP packet; a multiplexing determining unit 112, adapted to determine whether the UDP packet received by the receiving unit 111 carries a multiplexing flag which indicates that the UDP packet is multiplexed with at least two FP PDUs; and a demultiplexing unit 113, adapted to demultiplex the payload of the UDP packet if the multiplexing determining unit 112 determines that the UDP packet carries a multiplexing flag, and obtain at least two FP PDUs.

The payload of the UDP packet includes at least two FP PDUs and their multiplexing headers. Each multiplexing header includes a UID and a length field. Therefore, the demultiplexing unit 113 further includes: a multiplexing header reading sub-unit 115, adapted to read the multiplexing header of an FP PDU from the payload of the UDP packet; an FP PDU reading sub-unit 117, adapted to read the corresponding FP PDU from the payload of the UDP packet according to the length field in the multiplexing header read by the multiplexing header reading sub-unit 115; a belongingness determining sub-unit 116, adapted to determine the user data service flow which the FP PDU belongs to read by the FP PDU reading sub-unit 117 according to the UID in the multiplexing header read by the multiplexing header reading sub-unit 115; a completion determining sub-unit 114, adapted to determine whether the data in the payload of the UDP packet is read completely, and if the data is not read completely, instruct the multiplexing header reading sub-unit 115, FP PDU reading sub-unit 117 and belongingness determining sub-unit 116 to obtain a next FP PDU from the payload of this UDP packet.

The multiplexing determining unit 112 determines whether the UDP packet carries a multiplexing flag by judging whether the source UDP port number and/or destination UDP port number of the UDP packet is the predetermined value. If the source UDP port number and/or destination UDP port number of the UDP packet is the predetermined value, the UDP packet carries a multiplexing flag.

To sum up, in all embodiments of the present invention, the FP PDU is multiplexed as the payload of the UDP packet directly. The UDP packet is based on IP, and therefore, the technical solution provided by the embodiments is applicable to point-to-point link networking scenarios and routing networking scenarios. The FP PDU is multiplexed, without affecting the layers lower than the UDP. Therefore, no special requirement is imposed on the intermediate transmission node between the RNC and the NodeB. That is, this technical solution may be used separately, or used together with other layer-3 or layer-2 efficiency enhancing technologies such as UDP/IP header compression, PPPmux and PPP header compression to achieve higher transmission efficiency.

The FP PDUs satisfying the multiplexing conditions instead of all FP PDUs are multiplexed. Therefore, the FP PDUs of higher multiplexing efficiency may be selected for multiplexing, thus improving the multiplexing effect and the data transmission efficiency on the whole. For example, smaller FP PDUs may be selected for multiplexing, and larger FP PDUs are still transmitted in the original transmission mode, thus enhancing the transmission efficiency of the low-rate user services effectively and making the best of the transmission resources.

In the payload of the UDP packet, the user data service flow which the FP PDU belongs to is identified by the destination UDP port number. In this way, the user data service flow can be uniquely identified by a smaller multiplexing header, and the data transmission efficiency is improved. The 3GPP specifies that the user data service flow is identified by the source IP address, destination IP address, source UDP port number, and destination UDP port number; however, the uplink user data flow identifier on the Iub interface is separated from the downlink user data flow identifier, namely, the UDP port number allocated by the RNC is used to identify the data flow received by the RNC but the UDP port number allocated by the NodeB is used to identify the data flow received by the NodeB. Therefore, the user data service flow can be identified uniquely through a destination UDP port number.

An extension flag and an extension field are introduced into the multiplexing header. Therefore, the extension field is transmitted only if extension information needs to be carried, thus reducing the fixed overhead in the multiplexing header and improving flexibility of multiplexing.

Therefore, by using the specific source UDP port number and/or the destination UDP port number as a multiplexing flag of the UDP packet, the embodiments of the present invention may indicate whether the UDP packet is multiplexed without adding extra overhead, and enable the receiver to identify and resolve the multiplexed UDP packet against the non-multiplexed UDP packet correctly.

The multiplexing conditions may be configured to improve the multiplexing efficiency.

Although the present invention has been described through some exemplary embodiments and accompanying drawings, the invention is not limited to such embodiments. It is apparent that those skilled in the art can make various modifications and variations to the invention without departing from the scope of the invention.

## Claims

1. A method for transmitting data between a Radio Network Controller, RNC and a NodeB, **characterized in that** the method comprises:
Selecting (610) at least two Frame Protocol, FP, Protocol Data Units, PDUs satisfying multiplexing conditions among FP PDUs to be transmitted;
Multiplexing (620) the selected FP PDUs and encapsulating the multiplexed FP PDUs as payload into a User Datagram Protocol, UDP, packet, the UDP packet carrying a multiplexing flag; and
Transmitting (630) the UDP packet carrying the multiplexing flag;
wherein the multiplexing conditions comprise one or any combination of:
the FP PDUs for multiplexing have a same priority;
the length of the FP PDUs for multiplexing is less than a preset threshold; and
the FP PDUs for multiplexing belong to a same service type;
wherein the UDP packet carries the multiplexing flag by setting the multiplexing flag for the UDP packet; and the setting of the multiplexing flag for the UDP packet comprises:
setting a source UDP port number and/or a destination UDP port number of the UDP packet to a predetermined value.

2. The method according to claim 1, wherein the multiplexing of the selected FP PDUs comprises:
setting a multiplexing header for each selected FP PDU, the multiplexing header carrying a User Identifier, UID, indicative of a user data service flow which the FP PDU belongs to, and a length field indicative of a length of the FP PDU; and
concatenating each selected FP PDU and its multiplexing header.

3. The method according to claim 2, wherein the UID is a destination UDP port number of the user data service flow which the FP PDU belongs to.

4. The method to claim 2, wherein:
the multiplexing header further comprises an extension flag; and
when a value of the extension flag indicates existence of an extension field, the multiplexing header further comprises the extension field of a preset length.

5. The method according to claim 4, wherein partial or all bits of the extension field and the length field indicate the length of the corresponding FP PDU jointly.

6. The method according to any one of claims 1 to 5, wherein the multiplexing conditions further comprise:
the length of the payload of the UDP packet generated after multiplexing or the length of the UDP packet generated after multiplexing is less than a preset threshold.

7. An apparatus for transmitting data between a Radio Network Controller, RNC and a NodeB, **characterized in that** the apparatus comprises:
a selecting unit (101), adapted to select at least two Frame Protocol, FP, Protocol Data Units, PDUs satisfying multiplexing conditions among FP PDUs to be transmitted;
a multiplexing unit (103), adapted to multiplex the selected FP PDUs, and encapsulate the multiplexed FP PDUs as payload into a User Datagram Protocol, UDP, packet;
a flag setting unit (104), adapted to set a multiplexing flag for the UDP packet that uses the multiplexed FP PDUs as payload; and
a transmitting unit (102), adapted to transmit the UDP packet that carries the multiplexing flag;
wherein the flag setting unit (104) is adapted to set a source UDP port number and/or a destination UDP port number of the UDP packet to a predetermined value which is a multiplexing flag; and
wherein the multiplexing conditions comprise one or any combination of:
the FP PDUs for multiplexing have a same priority;
the length of the FP PDUs for multiplexing is less than a preset threshold; and
the FP PDUs for multiplexing belong to a same service type.

8. The apparatus according to claim 7, wherein the multiplexing unit (103) comprises:
a sub-unit that sets a multiplexing header for each FP PDU selected by the selecting unit, where the multiplexing header carries a User Identifier, UID indicative of a user data service flow which the FP PDU belongs to and a length field indicative of a length of the FP PDU; and
a sub-unit that concatenates each FP PDU and each multiplexing header of FP PDU.

9. The apparatus according to claim 8, wherein the UID is a destination UDP port number of the user data service flow which the FP PDU belongs to.

## Patentansprüche

1. Verfahren zum Übertragen von Daten zwischen einer Funknetz-Steuereinrichtung, RNC, und einem NodeB, **dadurch gekennzeichnet, dass** das Verfahren Folgendes umfasst:
Auswählen (610) von wenigstens zwei Rahmenprotokoll-Protokolldateneinheiten, FP-PDUs, die die Multiplexierungsbedingungen erfüllen, unter den zu übertragenden FP-PDUs;
Multiplexieren (620) der ausgewählten FP-PDUs und Einkapseln der multiplexierten FP-PDUs als eine Nutzlast in ein Anwenderdatagrammprotokoll-Paket, UDP-Paket, wobei das UDP-Paket einen Multiplexierungsmerker führt; und
Übertragen (630) des UDP-Pakets, das den Multiplexierungsmerker führt;
wobei die Multiplexierungsbedingungen eines oder irgendeine Kombination des Folgenden umfassen:
die FP-PDUs für das Multiplexieren besitzen eine gleiche Priorität;
die Länge der FP-PDUs für das Multiplexieren ist kleiner als ein vorgegebener Schwellenwert; und
die FP-PDUs für das Multiplexieren gehören zu einem gleichen Diensttyp;
wobei das UDP-Paket den Multiplexierungsmerker durch das Setzen des Multiplexierungsmerkers für das UDP-Paket führt; und das Setzen des Multiplexierungsmerkers für das UDP-Paket Folgendes umfasst:
Setzen einer Quell-UDP-Portnummer und/oder einer Ziel-UDP-Portnummer des UDP-Pakets auf einen vorgegebenen Wert.

2. Verfahren nach Anspruch 1, wobei das Multiplexieren der ausgewählten FP-PDUs Folgendes umfasst:
Setzen eines Multiplexierungskopfs für jede ausgewählte FP-PDU, wobei der Multiplexierungskopf einen Anwenderidentifizierer, UID, der einen Anwenderdaten-Dienstfluss, zu dem die FP-PDU gehört, angibt, und ein Längenfeld, das eine Länge der FP-PDU angibt, führt; und
Verketten jeder ausgewählten FP-PDU und ihres Multiplexierungskopfs.

3. Verfahren nach Anspruch 2, wobei die UID eine Ziel-UDP-Portnummer des Anwenderdaten-Dienstflusses ist, zu dem die FP-PDU gehört.

4. Verfahren nach Anspruch 2, wobei:
der Multiplexierungskopf ferner einen Erweiterungsmerker umfasst; und
wenn ein Wert des Erweiterungsmerkers das Vorhandensein eines Erweiterungsfeldes angibt, der Multiplexierungskopf ferner das Erweiterungsfeld mit einer vorgegebenen Länge umfasst.

5. Verfahren nach Anspruch 4, wobei ein Teil der oder alle Bits des Erweiterungsfeldes und des Längenfeldes die Länge der entsprechenden FP-PDU gemeinsam angeben.

6. Verfahren nach einem der Ansprüche 1 bis 5, wobei die Multiplexierungsbedingungen ferner Folgendes umfassen:
die Länge der Nutzlast des nach dem Multiplexieren erzeugten UDP-Pakets oder die Länge des nach dem Multiplexieren erzeugten UDP-Pakets ist kleiner als ein vorgegebener Schwellenwert.

7. Vorrichtung zum Übertragen von Daten zwischen einer Funknetz-Steuereinrichtung, RNC, und einem NodeB, **dadurch gekennzeichnet, dass** die Vorrichtung Folgendes umfasst:
eine Auswahleinheit (101), die dafür ausgelegt ist, wenigstens zwei Rahmenprotokoll-Protokolldateneinheiten, FP-PDUs, die die Multiplexierungsbedingungen erfüllen, unter den zu übertragenden FP-PDUs auszuwählen;
eine Multiplexierungseinheit (103), die dafür ausgelegt ist, die ausgewählten FP-PDUs zu multiplexieren und die multiplexierten FP-PDUs als eine Nutzlast in einen Anwenderdatagrammprotokoll-Paket, UDP-Paket, einzukapseln;
eine Merkersetzeinheit (104), die dafür ausgelegt ist, einen Multiplexierungsmerker für das UDP-Paket zu setzen, das die multiplexierten FP-PDUs als Nutzlast verwendet; und
eine Übertragungseinheit (102), die dafür ausgelegt ist, das UDP-Paket zu übertragen, das den Multiplexierungsmerker führt;
wobei die Merkersetzeinheit (104) dafür ausgelegt ist, eine Quell-UDP-Portnummer und/oder eine Ziel-UDP-Portnummer des UDP-Pakets auf einen vorgegebenen Wert zu setzen, der ein Multiplexierungsmerker ist; und
wobei die Multiplexierungsbedingungen eines oder irgendeine Kombination des Folgenden umfassen:
die FP-PDUs für das Multiplexieren besitzen eine gleiche Priorität;
die Länge der FP-PDUs für das Multiplexieren ist kleiner als ein vorgegebener Schwellenwert; und
die FP-PDUs für das Multiplexieren gehören zu einem gleichen Diensttyp.

8. Vorrichtung nach Anspruch 7, wobei die Multiplexierungseinheit (103) Folgendes umfasst:
eine Untereinheit, die einen Multiplexierungskopf für jede durch die Auswahleinheit ausgewählte FP-PDU setzt, wobei der Multiplexierungskopf einen Anwenderidentifizierer, UID, der einen Anwenderdaten-Dienstfluss, zu dem die FP-PDU gehört, angibt, und ein Längenfeld, das eine Länge der FP-PDU angibt, führt; und
eine Untereinheit, die jede FP-PDU und jeden Multiplexierungskopf der FP-PDU verkettet.

9. Vorrichtung nach Anspruch 8, wobei die UID eine Ziel-UDP-Portnummer des Anwenderdaten-Dienstflusses ist, zu dem die FP-PDU gehört.

## Revendications

1. Procédé de transmission de données entre un contrôleur de réseau de radiocommunication, RNC, et un NoeudB, le procédé étant **caractérisé en ce qu'**il comprend les étapes consistant à :
sélectionner (610) au moins deux unités de données de protocole, PDU, de protocole de trame, FP, remplissant des conditions de multiplexage parmi des PDU FP à transmettre ;
multiplexer (620) les PDU FP sélectionnées et encapsuler les PDU FP multiplexées sous forme de charge utile dans un paquet de protocole de datagramme utilisateur, UDP, le paquet UDP contenant un fanion de multiplexage ; et
transmettre (630) le paquet UDP contenant le fanion de multiplexage ;
lesquelles conditions de multiplexage comprennent une ou une combinaison quelconque des conditions suivantes :
les PDU FP à multiplexer possèdent une même priorité ;
la longueur des PDU FP à multiplexer est inférieure à un seuil préétabli ; et
les PDU FP à multiplexer appartiennent à un même type de service ;
lequel paquet UDP contient le fanion de multiplexage une fois que le fanion de multiplexage a été configuré pour le paquet UDP ; et lequel fanion de multiplexage est configuré pour le paquet UDP en :
fixant à une valeur prédéfinie un numéro de port UDP d'origine et/ou un numéro de port UDP de destination du paquet UDP.

2. Procédé selon la revendication 1, l'étape consistant à multiplexer les PDU FP sélectionnées comprenant les étapes consistant à :
configurer un en-tête de multiplexage pour chaque PDU FP sélectionnée, l'en-tête de multiplexage contenant un identifiant utilisateur, UID, indiquant un flux de service de transmission de données utilisateur auquel la PDU FP appartient, et un champ de longueur indiquant une longueur de la PDU FP ; et
concaténer chaque PDU FP sélectionnée et son en-tête de multiplexage.

3. Procédé selon la revendication 2, l'UID étant un numéro de port UDP de destination du flux de service de transmission de données utilisateur auquel la PDU FP appartient.

4. Procédé selon la revendication 2,
l'en-tête de multiplexage comprenant en outre un fanion d'extension ; et
si une valeur du fanion d'extension indique l'existence d'un champ d'extension, l'en-tête de multiplexage comprenant en outre le champ d'extension d'une longueur préétablie.

5. Procédé selon la revendication 4, une partie ou la totalité des bits du champ d'extension et du champ de longueur indiquant conjointement la longueur de la PDU FP correspondante.

6. Procédé selon l'une quelconque des revendications 1 à 5, les conditions de multiplexage comprenant en outre la condition suivante :
la longueur de la charge utile du paquet UDP généré suite au multiplexage ou la longueur du paquet UDP généré suite au multiplexage est inférieure à un seuil préétabli.

7. Appareil de transmission de données entre un contrôleur de réseau de radiocommunication, RNC, et un NoeudB, l'appareil étant **caractérisé en ce qu'**il comprend :
une unité de sélection (101), conçue pour sélectionner au moins deux unités de données de protocole, PDU, de protocole de trame, FP, remplissant des conditions de multiplexage parmi des PDU FP à transmettre ;
une unité de multiplexage (103), conçue pour multiplexer les PDU FP sélectionnées et encapsuler les PDU FP multiplexées sous forme de charge utile dans un paquet de protocole de datagramme utilisateur, UDP ;
une unité de configuration de fanion (104), conçue pour configurer un fanion de multiplexage pour le paquet UDP qui utilise les PDU FP multiplexées sous forme de charge utile ; et
une unité de transmission (102), conçue pour transmettre le paquet UDP contenant le fanion de multiplexage ;
laquelle unité de configuration de fanion (104) est conçue pour fixer à une valeur prédéfinie correspondant à un fanion de multiplexage un numéro de port UDP d'origine et/ou un numéro de port UDP de destination du paquet UDP ; et
lesquelles conditions de multiplexage comprennent une ou une combinaison quelconque des conditions suivantes :
les PDU FP à multiplexer possèdent une même priorité ;
la longueur des PDU FP à multiplexer est inférieure à un seuil préétabli ; et
les PDU FP à multiplexer appartiennent à un même type de service.

8. Appareil selon la revendication 7, l'unité de multiplexage (103) comprenant :
une sous-unité conçue pour configurer un en-tête de multiplexage pour chaque PDU FP sélectionnée par l'unité de sélection, l'en-tête de multiplexage contenant un identifiant utilisateur, UID, indiquant un flux de service de transmission de données utilisateur auquel la PDU FP appartient, et un champ de longueur indiquant une longueur de la PDU FP ; et
une sous-unité conçue pour concaténer chaque PDU FP et chaque en-tête de multiplexage de la PDU FP.

9. Appareil selon la revendication 8, l'UID étant un numéro de port UDP de destination du flux de service de transmission de données utilisateur auquel la PDU FP appartient.
